# EUROPÄISCHE PATENTSCHRIFT

(11) **EP 3 554 932 B1**
(45) Veröffentlichungstag und Bekanntmachung des Hinweises auf die Patenterteilung: **05.01.2022**
(21) Anmeldenummer: 17804142.2
(22) Anmeldetag: 16.11.2017
(51) Int. Cl.: B62J 45/40

(54) **STEUERUNGSVERFAHREN UND VORRICHTUNG FÜR EIN ANTIBLOCKIERSYSTEM EINES FAHRZEUGS**
CONTROL AND DEVICE FOR AN ANTI-LOCK BRAKE SYSTEM OF A VEHICLE
PROCEDE ET DISPOSITIF DE GESTION D'UNE SYSTEME ANTIBLOCAGE D'UN VÉHICULE

(30) Priorität: 19.12.2016 DE 102016225492
(43) Veröffentlichungstag der Anmeldung: 23.10.2019
(73) Patentinhaber: Robert Bosch GmbH, 70442 Stuttgart (DE)
(72) Erfinder: STEGMAIER, Juergen, 72074 Tuebingen (DE); DASBACH, Gregor, 72074 Tuebingen (DE); DACKERMANN, Tim, 72072 Tuebingen (DE); GREINER, Rinaldo, 72762 Reutlingen (DE); WIDMAIER, Georg, 71229 Leonberg (DE); BAUMGAERTNER, Daniel, 72070 Tuebingen (DE); WIENSS, Andreas, 72800 Eningen Unter Achalm (DE)
(86) Internationale Anmeldenummer: PCT/EP2017/079473
(87) Internationale Veröffentlichungsnummer: WO 2018/114154

(56) Entgegenhaltungen:
- WO-A1-2005/124368
- DE-A1- 19 928 624
- DE-A1-102006 042 766
- JP-A- S59 226 867

## Beschreibung

Die vorliegende Erfindung betrifft ein Steuerungsverfahren für ein Antiblockiersystem eines Elektrofahrrads als Fahrzeug, ein Steuergerät und ein Elektrofahrrad mit dem Steuergerät, wobei das Steuergerät dazu eingerichtet ist, das Steuerungsverfahren durchzuführen.

### Stand der Technik

Die Differenz einer Radgeschwindigkeit eines Fahrzeugs und der

Fahrzeuggeschwindigkeit normiert auf die Fahrzeuggeschwindigkeit, bezeichnet man als Schlupfwert des Rades. Wenn Antriebs- oder Bremskräfte auf ein Rad eines Fahrzeugs übertragen werden, weichen Fahrzeug- und Radgeschwindigkeit voneinander ab und es stellt sich ein Schlupfwert größer Null ein. Im Falle einer starken Bremsung kann die maximale Haftreibungskraft überschritten werden, wodurch beispielsweise Gleitreibung eintritt, der Schlupfwert somit stark ansteigt und ein Lenken des Fahrzeugs erschwert bzw. unmöglich wird.

Die Schriften DE 195 08 915 A1 und DE 101 58 382 A1 beschreiben jeweils ein Steuerungsverfahren für ein Antiblockiersystem an einem Fahrrad.

Die Schrift DE 199 28 624 A1 zeigt eine gattungsgemäßes Steuerungsverfahren an einem (Allrad-)Fahrzeug zur Steuerung des Antiblockiersystems oder von Fahrwerkskomponenten. Zur Geschwindigkeitssensierung wird ein Doppelradar verwendet welches auf das Rad und den Untergrund gerichtet ist.

### Offenbarung der Erfindung

Der vorliegenden Erfindung liegt die Aufgabe zugrunde, ein Antiblockiersystem an einem Fahrzeug zuverlässig und kostengünstig zu ermöglichen. Das Fahrzeug ist ein Elektrofahrrad.

Das erfindungsgemäße Fahrzeug nach Anspruch 7 umfasst zumindest ein Vorderrad und ein Antiblockiersystem. Das Antiblockiersystem des Fahrzeugs weist wenigstens eine ansteuerbare Bremse auf, beispielsweise eine Scheibenbremse. Am Fahrzeug sind außerdem ein Radarsensor und ein Steuergerät zur Ansteuerung der Bremse als Komponenten des Antiblockiersystems angeordnet. Der Radarsensor sendet ein Radarsignal in einen Bereich aus, wobei der Bereich einen Untergrund der Fahrstrecke und ein Vorderrad des Fahrzeugs umfasst. Das Radarsignal wird am Untergrund und am Rad reflektiert. Der Radarsensor erfasst anschließend ein am Untergrund und am Rad reflektiertes Radarfrequenzspektrum.

In einer Ausgestaltung umfasst das Fahrzeug einen optionalen Geschwindigkeitssensor. Der Geschwindigkeitssensor ist dazu eingerichtet, eine Fahrzeuggeschwindigkeit zu erfassen.

Erfindungsgemäß weist das Fahrzeug wenigstens einen Sensor zur Erkennung eines Abhebens eines Hinterrads auf. Bevorzugt ist der Sensor ein Beschleunigungssensor, welcher eine Beschleunigung in Richtung der Hochachse des Fahrzeugs erfasst. Es können zwei Beschleunigungssensoren am Fahrzeug zur Erkennung des Abhebens des Hinterrads angeordnet sein. Alternativ ist der Sensor ein Abstandssensor, welcher dazu eingerichtet ist, einen Abstand zwischen einem Rahmen des Fahrzeugs bzw. dem Hinterrad des Fahrzeugs und dem Untergrund der Fahrtstrecke zu erfassen.

Darüber hinaus kann das Fahrzeug optional ein einstellbares Federelement, insbesondere eine Federgabel, umfassen. Das Federelement ist dazu eingerichtet, in einen starren Betriebszustand eingestellt zu werden.

Das erfindungsgemäße Steuerungsverfahren nach Anspruch 1 umfasst wenigstens eine Aussendung des Radarsignals in den Bereich, welcher den Untergrund der Fahrstrecke und ein Rad des Fahrzeugs umfasst. Anschließend erfolgt eine Erfassung des am Untergrund und am Rad reflektierten Radarfrequenzspektrums mittels des Radarsensors.

Gemäß des Dopplereffektes kann aus einer Frequenzverschiebung des erfassten Radarfrequenzspektrums zum ausgesendeten Radarsignal eine Geschwindigkeit des Fahrzeugs ermittelt werden. Blockiert das Rad in dem vom Radarsignal abgedeckten Bereich, so weicht die Radgeschwindigkeit von der Fahrzeuggeschwindigkeit ab und das erfasste Radarfrequenzspektrum weist zwei lokale Maximalstellen auf. Somit kann aus dem erfassten Radarfrequenzspektrum eine Abweichung der Fahrzeuggeschwindigkeit von der Radgeschwindigkeit, d.h. das Blockieren des Rades bzw. der Schlupfwert, ermittelt werden.

In einem nachfolgenden Schritt erfolgt eine Ansteuerung der wenigstens einen Bremse in Abhängigkeit einer erkannten Abweichung zwischen der Fahrzeuggeschwindigkeit und der Radgeschwindigkeit in Abhängigkeit des erfassten Radarfrequenzspektrums mittels des Steuergeräts. Die Bremse ist bevorzugt eine Vorderradbremse und/oder eine Hinterradbremse eines Elektrofahrrads. Durch die Ansteuerung der Bremse wird die Bremse zumindest kurzzeitig gelöst oder es erfolgt zumindest eine kurzzeitige Reduktion des Bremsdrucks der Bremse.

Durch das Steuerungsverfahren wird ein Blockieren mindestens eines Rades, bevorzugt eines Vorderrads eines Elektrofahrrads, vermieden, wodurch ein Lenken des Fahrzeugs mit dem Rad möglich bleibt. Das Verfahren weist gegenüber den im Stand der Technik beschriebenen Steuerungsverfahren für Antiblockiersysteme, welche zur Geschwindigkeitserfassung Radarsensoren verwenden, den Vorteil auf, dass das Antiblockiersystems nur einen einzelnen Radarsensor aufweist. Dies wird durch eine geringe Radbreite des Fahrzeugs, insbesondere eines Elektrofahrrads, ermöglicht, wodurch das erfasste Radarfrequenzspektrum durch die Rückreflexion des Radarsignals an dem Rad und dem Untergrund der Fahrtstrecke Informationen zur Fahrzeuggeschwindigkeit und zur Radgeschwindigkeit enthält. Die Radbreite ist typischerweise kleiner gleich 100 mm.

In einer Ausgestaltung umfasst das Steuerungsverfahren eine Erfassung einer Fahrzeuggeschwindigkeit mittels eines Geschwindigkeitssensors, welcher am Fahrzeug angeordnet ist, wobei die Ansteuerung der Bremse in dieser Ausgestaltung zusätzlich in Abhängigkeit der ermittelten Fahrzeuggeschwindigkeit erfolgt. Die Ansteuerung der Bremse wird durch diese Ausgestaltung vorteilhafterweise genauer, wodurch die Fahrsicherheit für den Fahrer des Fahrzeugs erhöht wird.

Erfindungsgemäß weist das Steuerungsverfahren eine Erkennung des Abhebens des Hinterrads des Fahrzeugs in Abhängigkeit der erfassten Beschleunigung in Richtung der Hochachse des Fahrzeugs und/oder des erfassten Abstands zum Untergrund auf. Die Ansteuerung der Bremse erfolgt erfindungsgemäß zusätzlich in Abhängigkeit des erkannten Abhebens. Dies weist den Vorteil auf, dass beim Abheben des Hinterrades, beispielsweise der Bremsdruck der Vorderradbremse eines Elektrofahrrads reduziert bzw. die Vorderradbremse gelöst wird, wodurch das Risiko eines Überschlags des Fahrzeugs um die Querachse verringert wird.

In einer Weiterführung weist das Steuerungsverfahren eine Einstellung des wenigstens einen einstellbaren Federelements in einen starren Betriebszustand in Abhängigkeit der erkannten Abweichung zwischen der Fahrzeuggeschwindigkeit und der Radgeschwindigkeit auf. Dadurch wird beim Bremsen des Fahrzeugs insbesondere eine Drehung bzw. ein Nicken um die Querachse des Fahrzeugs vermieden, d.h. das Bremsen und Lenken des Fahrzeugs erfolgt kontrollierter.

Die Erfindung betrifft auch das Steuergerät nach Anspruch 4. Das Steuergerät umfasst mindestens eine Recheneinheit, wobei die Recheneinheit dazu eingerichtet ist, das Steuerungsverfahren durchzuführen. Die Recheneinheit erfasst ein erstes Sensorsignal von dem Radarsensor, wobei das erste Sensorsignal das erfasste Radarfrequenzspektrum repräsentiert. Die Recheneinheit erzeugt außerdem mindestens ein erstes Steuersignal zur Ansteuerung der wenigstens einen Bremse in Abhängigkeit des erfassten ersten Sensorsignals.

Vorzugsweise erfasst das Steuergerät ein zweites Sensorsignal von dem Geschwindigkeitssensor, wobei das zweite Sensorsignal die Fahrzeuggeschwindigkeit repräsentiert. In dieser Ausgestaltung erzeugt die Recheneinheit das erste Steuersignal zur Ansteuerung der Bremse zusätzlich in Abhängigkeit des zweiten Sensorsignals.

Erfindungsgemäß erfasst die Recheneinheit ein drittes Sensorsignal, wobei das dritte Sensorsignal das Abheben des wenigstens einen Hinterrads repräsentiert. Das erste Steuersignal zur Ansteuerung der Bremse wird erfindungsgemäß zusätzlich in Abhängigkeit des dritten Sensorsignals erzeugt.

Optional kann die Recheneinheit ein zweites Steuersignal zur Einstellung des wenigstens einen einstellbaren Federelements in Abhängigkeit der erkannten Abweichung zwischen der Fahrzeuggeschwindigkeit und der Radgeschwindigkeit erzeugen.

Die vorliegende Erfindung wird nachfolgend anhand bevorzugter Ausführungsformen und beigefügter Zeichnungen erläutert.
- Figur 1:: Elektrofahrrad
- Figur 2:: Blockschaltbild eines Steuergerätes
- Figur 3:: Ablaufdiagramm eines Steuerungsverfahrens
- Figur 4:: erfasstes Radarfrequenzspektrum ohne Abweichung zwischen Fahrzeuggeschwindigkeit und Radgeschwindigkeit
- Figur 5:: erfasstes Radarfrequenzspektrum mit Abweichung zwischen Fahrzeuggeschwindigkeit und Radgeschwindigkeit, d.h. bei blockierendem Rad

### Ausführungsbeispiele

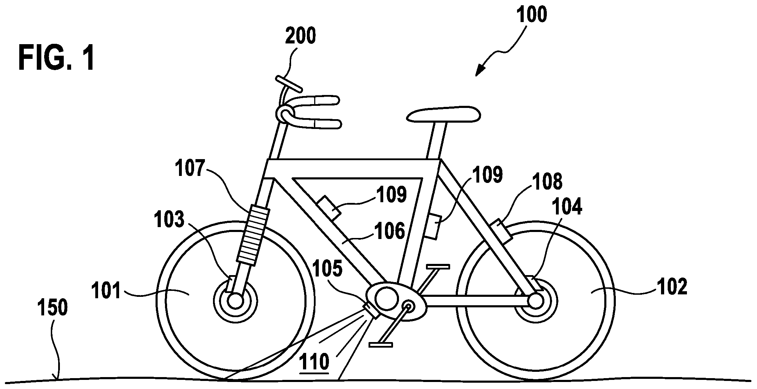

Figur 1 zeigt als Fahrzeug 100 ein Elektrofahrrad. Das Elektrofahrrad 100 weist einen Rahmen 106 und als Rad ein Vorderrad 101 sowie ein Hinterrad 102 auf. Am Elektrofahrrad 100 sind außerdem ein Steuergerät 200 und als Bremsen eine Vorderradbremse 103 und eine Hinterradbremse 104 angeordnet. Die Vorderradbremse 103 und die Hinterradbremse 104 sind als Scheibenbremsen ausgeführt. Alternativ können andere Bremsenbauarten am Vorderrad 101 als Vorderradbremse 103 und/oder am Hinterrad 102 als Hinterradbremse 104 angeordnet sein, beispielsweise Felgenbremsen. Am Elektrofahrrad 100 sind außerdem ein Geschwindigkeitssensor 108 sowie zwei Beschleunigungssensoren 109 angeordnet. Der Geschwindigkeitssensor 108 ist dazu eingerichtet, eine Fahrzeuggeschwindigkeit in Fahrtrichtung zu erfassen. Der mindestens eine Beschleunigungssensor 109 ist dazu eingerichtet, eine Beschleunigung des Elektrofahrrads 100 in Richtung der Hochachse des Elektrofahrrads 100 zu erfassen, wodurch ein Abheben des Hinterrads 102 erkannt werden kann. Das Elektrofahrrad 100 fährt auf einem Untergrund 150 einer Fahrtstrecke.

Das Antiblockiersystem des Elektrofahrrads 100 umfasst wenigstens das Steuergerät 200 und eine Bremse 103 und/oder 104, insbesondere die Vorderradbremse 103. Bevorzugt umfasst das Antiblockiersystem des Elektrofahrrads 100 auch die optionale Hinterradbremse 104. Außerdem weist das Antiblockiersystem des Elektrofahrrads 100 einen Radarsensor 105 auf. Der Radarsensor 105 ist in diesem Ausführungsbeispiel an einem Rahmen 106 des Elektrofahrrads 100 oder dem Motorgehäuse des Elektrofahrrads 100 angeordnet. Der Radarsensor 105 sendet ein Radarsignal in einen Bereich 110 aus. Der Bereich 110 des ausgesendeten Radarsignals umfasst einen Untergrund 150 der Fahrtstrecke und das Vorderrad 101 des Elektrofahrrads 100. Beispielsweise ist der Radarsensor 105 am Motor des Elektrofahrrads 100 angeordnet und sendet das Radarsignal in Richtung der Längsachse nach vorne und in Richtung der Hochachse nach unten aus. Der Radarsensor 105 erfasst außerdem ein am Untergrund 150 und dem Vorderrad 101 reflektiertes Radarfrequenzspektrum. Blockiert das Vorderrad 101 durch ein Bremsen des Elektrofahrrads 100 mit der Vorderradbremse 103, so weicht eine Radgeschwindigkeit des Vorderrads 101 von der Fahrzeuggeschwindigkeit des Elektrofahrrads 100 ab, wodurch das Lenken des Elektrofahrrads 100 erschwert wird. Bei einem blockierendem Vorderrad 101 bzw. einer Abweichung der Radgeschwindigkeit des Vorderrads 101 von der Fahrzeuggeschwindigkeit des Elektrofahrrads 100 zeigt das Radarfrequenzspektrum gemäß des Dopplereffekts eine breitere Frequenzverteilung bzw. zwei ausgeprägte Maximalstellen, welche sich der Radgeschwindigkeit bzw. der der Fahrzeuggeschwindigkeit zuordnen lassen. Eine Abweichung der Fahrzeuggeschwindigkeit von der Radgeschwindigkeit bzw. ein Blockieren des Rads 101 oder 102 wird demnach in Abhängigkeit des erfassten Radarfrequenzspektrums erkannt. Alternativ kann der Radarsensor 105 das Radarsignal in Richtung der Längsachse nach hinten und in Richtung der Hochachse nach unten aussenden, wodurch das Radarsignal den Untergrund 150 und das Hinterrad 102 abdeckt.

Zusätzlich umfasst das Elektrofahrrad 100 mindestens eine einstellbare Federgabel als einstellbares Federelement 107. Das einstellbare Federelement 107 kann auch an anderen Stellen des Fahrzeugs 100, beispielsweise am Sattelrohr des Rahmens 106, angeordnet sein. Die Federgabel 107 ist dazu eingerichtet, Stöße des Vorderrads 101 auf den Rahmen 106 des Elektrofahrrads 100 zu dämpfen, wobei die Federgabel in einem definierten Betriebszustand mechanisch starr eingestellt werden kann. Das Steuergerät 200 des Elektrofahrrads 100 ist in einer optionalen Ausgestaltung dazu eingerichtet, die Federgabel 107 in den starren Betriebszustand einzustellen. Der starre Betriebszustand reduziert ein mehrmaliges Hin- und Zurückdrehen des Elektrofahrrads 100 um dessen Querachse beim Bremsvorgang mit dem Steuerungsverfahren.

Das Steuergerät 200 kann zusätzlich dazu eingerichtet sein, beispielsweise einen Elektromotor des Elektrofahrrads 100 als Antriebsmotor in Abhängigkeit eines erfassten manuellen Tretdrehmoments des Radfahrers anzusteuern. Alternativ kann ein separates Motorsteuergerät zur Ansteuerung des Elektromotors vorgesehen sein.

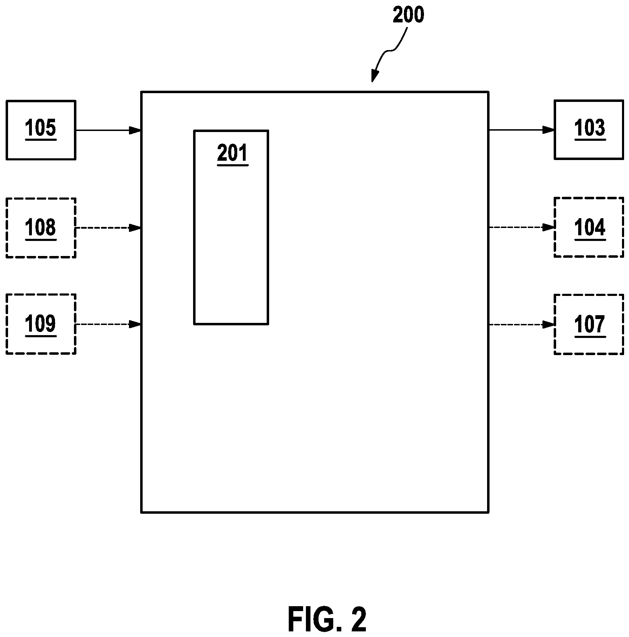

Das Steuergerät 200 umfasst eine Recheneinheit 201, siehe Figur 2. Die Recheneinheit 201 erfasst ein erstes Sensorsignal vom Radarsensor 105. Das erste Sensorsignal repräsentiert das am Vorderrad 101 bzw. dem Hinterrad 102 und dem Untergrund 150 reflektierte und vom ersten Radarsensor 105 erfasste Radarfrequenzspektrum. Die Recheneinheit 201 erzeugt mindestens ein erstes Steuersignal zur Ansteuerung 350 der mindestens einen Bremse (103, 104) in Abhängigkeit des erfassten ersten Sensorsignals.

Die Recheneinheit 201 kann in einer optionalen Ausgestaltung ein zweites Sensorsignal vom Geschwindigkeitssensor 108 erfassen, wobei das erste Steuersignal zur Ansteuerung 350 der Vorderradbremse 103 in dieser Ausgestaltung zusätzlich in Abhängigkeit des zweiten Sensorsignals erzeugt wird.

Die Recheneinheit 201 erfasst ein drittes Sensorsignal vom Sensor 109, wobei das erste Steuersignal zur Ansteuerung 350 der Vorderradbremse 103 in dieser Ausgestaltung zusätzlich in Abhängigkeit des dritten Sensorsignals erzeugt wird. Der Sensor 109 erfasst das Abheben des Hinterrades 102. Der Sensor 109 ist beispielsweise ein Beschleunigungssensor, welcher eine Beschleunigung in Richtung der Hochachse des Elektrofahrrads 100 erfasst. Es können mehrere Beschleunigungssensoren 109 vorgesehen sein. Alternativ ist der Sensor 109 ein Abstandssensor, welcher einen Abstand des Rahmens 106 oder des Hinterrades 102 zum Untergrund 150 der Fahrtstrecke bestimmt.

Die Recheneinheit 201 erzeugt optional außerdem ein zweites Steuersignal zur Einstellung 380 des einstellbaren Federelements 107 in den starren Betriebszustand in Abhängigkeit des erfassten ersten Sensorsignals.

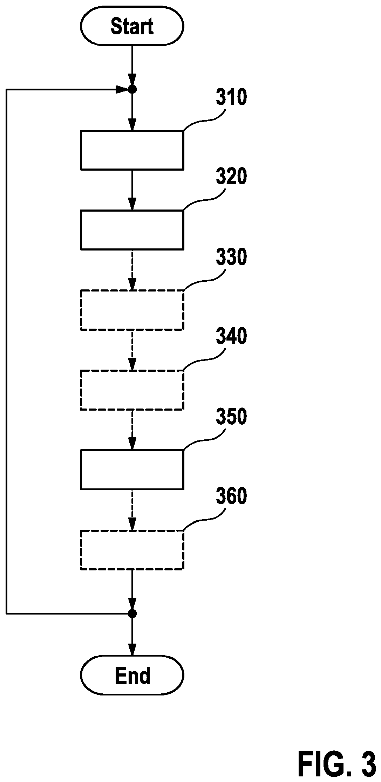

In Figur 3 ist ein Ablaufdiagramm des Steuerungsverfahrens dargestellt. In einem ersten Schritt 310 wird das Radarsignal mittels des Radarsensors 105 in den Bereich 110 ausgesendet. Das Radarsignal wird beispielsweise, wie in Figur 1 dargestellt, in Richtung der Längsachse nach vorne und in Richtung der Hochachse nach unten ausgesendet. Der Bereich 110 umfasst den Untergrund 150 der Fahrtstrecke sowie ein Rad 101 oder 102, insbesondere das Vorderrad 101. In einem zweiten Schritt 320 erfolgt eine Erfassung 320 des am Untergrund 150 und am Rad 101 oder 102 reflektierten Radarfrequenzspektrums. In einem optionalen Schritt 330 wird die Geschwindigkeit des Fahrzeugs 100 mittels eines Geschwindigkeitssensors 108 erfasst. Zusätzlich wird das Abheben des Hinterrades 102 in dem Schritt 340 mittels des Sensors 109 erkannt. Die Ansteuerung 350 der Bremse 103 und/oder 104 erfolgt mindestens in Abhängigkeit des erfassten Radarfrequenzspektrums des erkannten Abhebens des Hinterrads 102. Optional kann die Ansteuerung 350 der Bremse 103 und/oder 104 zusätzlich in Abhängigkeit der erfassten Geschwindigkeit durchgeführt werden. In einem anschließenden Schritt 360 kann zusätzlich die Einstellung 360 des einstellbaren Federelements 107 erfolgen.

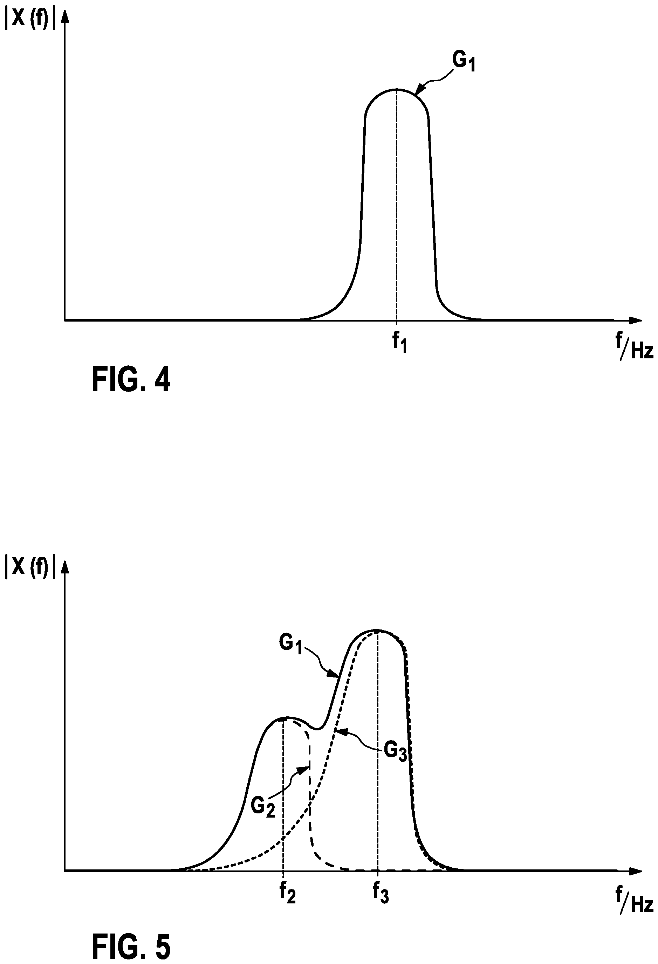

In Figur 4 ist ein Radarfrequenzspektrum während der Fahrt des Elektrofahrrads 100 ohne Vorderradschlupf dargestellt. Der Funktionsgraph G₁ bzw. die Frequenzen f des dargestellten Radarfrequenzspektrums verändern sich in Abhängigkeit der Fahrzeuggeschwindigkeit, d.h. aus dem Frequenzspektrum lässt sich gemäß des Dopplereffekts die Fahrzeuggeschwindigkeit ermitteln. Die Frequenzunterschiede zwischen dem am Untergrund 150 und dem am Vorderrad 101 reflektierten ersten Radarsignal sind gering, weshalb der Funktionsgraph nur eine Maximalstelle an der Frequenz f₁ aufweist. Die Amplitude |X(f₁)| an der Maximalstelle und/oder die Halbwertsbreite des Funktionsgraphen G₁ an der Maximalstelle sind abhängig von der Beschaffenheit des Untergrunds 150 und/oder des Vorderrades 101.

In Figur 5 ist ein im Schritt 320 erfasstes Radarfrequenzspektrum beim Bremsen mit blockierendem Vorderrad 101 dargestellt. In diesem Fall ist die

Fahrzeuggeschwindigkeit des Elektrofahrrads 100 größer als die Radgeschwindigkeit des Vorderrades 101, d.h. es liegt eine Abweichung zwischen der Fahrzeuggeschwindigkeit und der Radgeschwindigkeit vor. Gemäß des Dopplereffektes weisen der vom Untergrund 150 reflektierte Radarfrequenzanteil des erfassten Radarfrequenzspektrums, welcher von dem Funktionsgraph G₃ repräsentiert wird, und der vom Vorderrad 101 reflektierte Radarfrequenzanteil des erfassten Radarfrequenzspektrums, welcher von dem Funktionsgraph G₂ repräsentiert wird, unterschiedliche Frequenzen f bzw. Amplituden |X(f)| auf. Mit anderen Worten ist der Frequenzunterschied des vom Untergrund 150 reflektierten Radarfrequenzanteils G₃ zum ausgesendeten Radarsignal größer als der Frequenzunterschied des vom Vorderrad 101 reflektierten Radarfrequenzanteils G₂ zum ausgesendeten Radarsignal. Das erfasste Radarfrequenzspektrum, welches durch den Funktionsgraphen G₁ repräsentiert wird, zeigt demnach zwei Maximalstellen. Durch eine Analyse des Radarfrequenzspektrums bzw. eine Erkennung von zwei Maximalstellen an den Frequenzen f₂ und f₃ kann demnach eine Abweichung der Fahrzeuggeschwindigkeit von der Radgeschwindigkeit, d.h. ein Blockieren des Vorderrads 101, erkannt werden. Bei einer erkannten Abweichung der Fahrzeuggeschwindigkeit von der Radgeschwindigkeit in Abhängigkeit des erfassten Radarfrequenzspektrums, d.h. beispielsweise durch das Erkennen zweier Maximalstellen im Radarfrequenzspektrum, wird durch das Steuerungsverfahren mindestens eine Bremse des Fahrzeugs angesteuert.

Zusätzlich kann in Abhängigkeit der Amplitude |X(f)| des Radarfrequenzanteils des erfassten Radarfrequenzspektrums, welcher vom Vorderrad 101 reflektiert und vom Funktionsgraphen G₂ repräsentiert wird, durch Vergleich mit Amplitudenreferenzwerten, beispielsweise an der Maximalstelle des Funktionsgraphen G₂, ein Nässegrad NG des Untergrunds 150 der Fahrtstrecke bestimmt werden. Die Ansteuerung 350 der wenigstens einen Bremse 103 und/oder 104 kann in dieser Ausgestaltung zusätzlich in Abhängigkeit des bestimmten Nässegrads NG des Untergrunds 150 erfolgen.

## Patentansprüche

1. Steuerungsverfahren für ein Antiblockiersystem eines Elektrofahrrads (100) als Fahrzeug, wobei das Elektrofahrrad (100) wenigstens eine ansteuerbare Vorderradbremse (103) und einen Radarsensor (105) sowie ein Steuergerät (200) aufweist, wobei das Steuerungsverfahren mindestens die folgenden Schritte umfasst
• Aussendung (310) wenigstens eines Radarsignals in einen Bereich (110), wobei der Bereich (110) einen Untergrund (150) der Fahrstrecke und ein Vorderrad (101) des Fahrzeugs (100) umfasst,
• Erfassung (320) eines am Untergrund (150) und am Vorderrad (101) reflektierten Radarfrequenzspektrums mittels des Radarsensors (105),
**gekennzeichnet durch** die folgenden Schritte
• Erkennung (340) eines Abhebens eines Hinterrads (102) des Fahrzeugs (100) in Abhängigkeit einer erfassten Beschleunigung in Richtung der Hochachse des Fahrzeugs und/oder eines erfassten Abstands zum Untergrund mittels eines Sensors (109), und
• Ansteuerung (350) der Vorderradbremse (103) in Abhängigkeit einer erkannten Abweichung zwischen einer Fahrzeuggeschwindigkeit und einer Radgeschwindigkeit in Abhängigkeit des erfassten Radarfrequenzspektrums und in Abhängigkeit des erkannten Abhebens mittels des Steuergeräts (200).

2. Steuerungsverfahren nach Anspruch 1, **dadurch gekennzeichnet, dass** das Steuerverfahren folgenden Schritt umfasst
• Erfassung (330) einer Fahrzeuggeschwindigkeit mittels eines Geschwindigkeitssensors (108), welcher am Fahrzeug (100) angeordnet ist, wobei
• die Ansteuerung (350) der Vorderradbremse (103) zusätzlich in Abhängigkeit der ermittelten Fahrzeuggeschwindigkeit erfolgt.

3. Steuerungsverfahren nach einem der vorhergehenden Ansprüche, **dadurch gekennzeichnet, dass** das Steuerungsverfahren eine Einstellung (360) wenigstens eines einstellbaren Federelements (107) in einen starren Betriebszustand in Abhängigkeit der erkannten Abweichung zwischen der Fahrzeuggeschwindigkeit und der Radgeschwindigkeit umfasst.

4. Steuergerät (200), umfassend eine Recheneinheit (201), wobei die Recheneinheit (201) dazu eingerichtet ist, ein Steuerungsverfahren nach einem der Ansprüche 1 bis 3 durchzuführen, wobei die Recheneinheit (201)
• ein erstes Sensorsignal von einem Radarsensor (105) erfasst, wobei das erste Sensorsignal ein erfasstes Radarfrequenzspektrum repräsentiert,
• ein drittes Sensorsignal erfasst, wobei das dritte Sensorsignal ein Abheben eines Hinterrads (102) repräsentiert, und
• mindestens ein erstes Steuersignal zur Ansteuerung (350) der Vorderradbremse (103) in Abhängigkeit des erfassten ersten Sensorsignals und in Abhängigkeit des dritten Sensorsignals erzeugt.

5. Steuergerät (200) nach Anspruch 4, **dadurch gekennzeichnet, dass** die Recheneinheit (201)
• ein zweites Sensorsignal von einem Geschwindigkeitssensor (108) erfasst, wobei das zweite Sensorsignal die Fahrzeuggeschwindigkeit repräsentiert, wobei die Recheneinheit (201)
• das erste Steuersignal zur Ansteuerung (350) der Vorderradbremse (103) zusätzlich in Abhängigkeit des zweiten Sensorsignals erzeugt.

6. Steuergerät (200) nach einem der Ansprüche 4 oder 5, **dadurch gekennzeichnet, dass** die Recheneinheit (201) ein zweites Steuersignal zur Einstellung (360) wenigstens eines einstellbaren Federelements (107) in Abhängigkeit der erkannten Abweichung zwischen der Fahrzeuggeschwindigkeit und der Radgeschwindigkeit erzeugt.

7. Elektrofahrrad (100) als Fahrzeug, umfassend wenigstens folgender Komponenten
• eine ansteuerbare Vorderradbremse (103),
• einen Radarsensor (105), wobei der Radarsensor (105)
i. ein Radarsignal in einen Bereich (110), welcher einen Untergrund (150) der Fahrstrecke und ein Vorderrad (101) des Fahrzeugs (100) umfasst, aussendet, und
ii. ein am Untergrund (150) und am Vorderrad (101) reflektiertes Radarfrequenzspektrum erfasst,
• einen Sensor (109) zur Erkennung (340) eines Abhebens eines Hinterrads (102), wobei der Sensor (109) insbesondere ein Beschleunigungssensor und/oder ein Abstandssensor ist, und
• ein Steuergerät (200) zur Ansteuerung (350) der Vorderradbremse (103) nach einem der Ansprüche 4 bis 6.

8. Fahrzeug (100) nach Anspruch 7, **dadurch gekennzeichnet, dass** das Fahrzeug (100) einen Geschwindigkeitssensor (108) aufweist, welcher dazu eingerichtet ist, eine Fahrzeuggeschwindigkeit zu erfassen.

9. Fahrzeug (100) nach einem der Ansprüche 7 oder 8, wobei das Fahrzeug (100) ein einstellbares Federelement (107) aufweist, wobei das Federelement (107) dazu eingerichtet ist, in einen starren Betriebszustand eingestellt zu werden.

## Claims

1. Control method for an anti-lock braking system of an electric bicycle (100) as vehicle, wherein the electric bicycle (100) has at least one actuable front wheel brake (103) and a radar sensor (105) and also a controller (200), wherein the control method comprises at least the following steps
• emitting (310) at least one radar signal into an area (110), wherein the area (110) comprises a ground (150) of the route and a front wheel (101) of the vehicle (100),
• capturing (320) a radar frequency spectrum reflected from the ground (150) and from the front wheel (101) by way of the radar sensor (105),
**characterized by** the following steps
• identifying (340) that a rear wheel (102) of the vehicle (100) is raised on the basis of a captured acceleration in the direction of the height axis of the vehicle and/or a captured distance from the ground by way of a sensor (109), and
• actuating (350) the front wheel brake (103) on the basis of an identified deviation between a vehicle speed and a radar speed on the basis of the captured radar frequency spectrum and on the basis of the identified raising by way of the controller (200).

2. Control method according to Claim 1, **characterized in that** the control method comprises the following step
• capturing (330) a vehicle speed by way of a speed sensor (108) that is arranged on the vehicle (100), wherein
• the front wheel brake (103) is additionally actuated (350) on the basis of the ascertained vehicle speed.

3. Control method according to either of the preceding claims, **characterized in that** the control method comprises adjusting (360) at least one adjustable suspension element (107) into a rigid operating state on the basis of the identified deviation between the vehicle speed and the wheel speed.

4. Controller (200), comprising a computing unit (201), wherein the computing unit (201) is designed to perform a control method according to one of Claims 1 to 3, wherein the computing unit (201)
• captures a first sensor signal from a radar sensor (105), wherein the first sensor signal represents a captured radar frequency spectrum,
• captures a third sensor signal, wherein the third sensor signal represents raising of a rear wheel (102), and
• generates at least one first control signal for actuating (350) the front wheel brake (103) on the basis of the captured first sensor signal and on the basis of the third sensor signal.

5. Controller (200) according to Claim 4, **characterized in that** the computing unit (201)
• captures a second sensor signal from a speed sensor (108), wherein the second sensor signal represents the vehicle speed, wherein the computing unit (201)
• additionally generates the first control signal for actuating (350) the front wheel brake (103) on the basis of the second sensor signal.

6. Controller (200) according to either of Claims 4 and 5, **characterized in that** the computing unit (201) generates a second control signal for adjusting (360) at least one adjustable suspension element (107) on the basis of the identified deviation between the vehicle speed and the wheel speed.

7. Electric bicycle (100) as vehicle, comprising at least the following components
• an actuable front wheel brake (103),
• a radar sensor (105), wherein the radar sensor (105)
i. emits a radar signal into an area (110) that comprises a ground (150) of the route and a front wheel (101) of the vehicle (100), and
ii. captures a radar frequency spectrum reflected from the ground (105) and from the front wheel (101),
• a sensor (109) for identifying (340) that a rear wheel (102) is raised, wherein the sensor (109) is in particular an acceleration sensor and/or a distance sensor, and
• a controller (200) for actuating (350) the front wheel brake (103) according to one of Claims 4 to 6.

8. Vehicle (100) according to Claim 7, **characterized in that** the vehicle (100) has a speed sensor (108) that is designed to capture a vehicle speed.

9. Vehicle (100) according to either of Claims 7 and 8, wherein the vehicle (100) has an adjustable suspension element (107), wherein the suspension element (107) is designed to be adjusted into a rigid operating state.

## Revendications

1. Procédé de commande destiné à un système antiblocage d'un vélo électrique (100) en tant que véhicule, le vélo électrique (100) présentant au moins un frein de roue avant (103) pouvant être piloté et un capteur radar (105) ainsi qu'un appareil de commande (200), le procédé de commande comprenant au moins les étapes suivantes consistant à
• émettre (310) au moins un signal radar dans une zone (110), la zone (110) comprenant le sol (150) du parcours et une roue avant (101) du véhicule (100),
• détecter (320) au moyen du capteur radar (105) un spectre de fréquence radar réfléchi sur le sol (150) et sur la roue avant (101),
**caractérisé par** les étapes suivantes consistant à
• reconnaître (340) un décollage d'une roue arrière (102) du véhicule (100) en fonction d'une accélération détectée en direction de l'axe vertical du véhicule et/ou d'une distance détectée par rapport au sol au moyen d'un capteur (109), et
• piloter (350) le frein de roue avant (103) en fonction d'un écart reconnu entre une vitesse de véhicule et une vitesse de roue en fonction du spectre de fréquence radar détecté et en fonction du décollage reconnu au moyen de l'appareil de commande (200).

2. Procédé de commande selon la revendication 1, **caractérisé en ce que** le procédé de commande comprend l'étape suivante consistant à
• détecter (330) une vitesse de véhicule au moyen d'un capteur de vitesse (108) qui est disposé sur le véhicule (100), dans lequel
• le pilotage (350) du frein de roue avant (103) est effectué en outre en fonction de la vitesse de véhicule déterminée.

3. Procédé de commande selon l'une quelconque des revendications précédentes, **caractérisé en ce que** le procédé de commande comprend un réglage (360) d'au moins un élément faisant ressort réglable (107) sur un état de fonctionnement rigide en fonction de l'écart reconnu entre la vitesse de véhicule et la vitesse de roue.

4. Appareil de commande (200), comprenant une unité de calcul (201), l'unité de calcul (201) étant aménagée pour effectuer un procédé de commande selon l'une quelconque des revendications 1 à 3, dans lequel l'unité de calcul (201)
• détecte un premier signal de capteur d'un capteur radar (105), le premier signal de capteur représentant un spectre de fréquence radar détecté,
• détecte un troisième signal de capteur, le troisième signal de capteur représentant un décollage d'une roue arrière (102), et
• génère au moins un premier signal de commande pour le pilotage (350) du frein de roue avant (103) en fonction du premier signal de capteur détecté et en fonction du troisième signal de capteur.

5. Appareil de commande (200) selon la revendication 4, **caractérisé en ce que** l'unité de calcul (201)
• détecte un deuxième signal de capteur d'un capteur de vitesse (108), le deuxième signal de capteur représentant la vitesse de véhicule, dans lequel l'unité de calcul (201)
• génère le premier signal de commande pour le pilotage (350) du frein de roue avant (103) en outre en fonction du deuxième signal de commande.

6. Appareil de commande (200) selon l'une quelconque des revendications 4 et 5, **caractérisé en ce que** l'unité de calcul (201) génère un deuxième signal de commande pour le réglage (360) d'au moins un élément faisant ressort réglable (107) en fonction de l'écart reconnu entre la vitesse de véhicule et la vitesse de roue.

7. Vélo électrique (100) en tant que véhicule, comprenant au moins les composants suivants
• un frein de roue avant (103) pouvant être piloté,
• un capteur radar (105), dans lequel le capteur radar (105)
i. émet un signal radar dans une zone (110) qui comprend un sol (150) du parcours et une roue avant (101) du véhicule (100), et
ii. détecte un spectre de fréquence radar réfléchi sur le sol (150) et sur la roue avant (101),
• un capteur (109) pour la reconnaissance (340) d'un décollage d'une roue arrière (102), le capteur (109) étant en particulier un capteur d'accélération et/ou un capteur de distance, et
• un appareil de commande (200) pour le pilotage (350) du frein de roue avant (103) selon l'une quelconque des revendications 4 à 6.

8. Véhicule (100) selon la revendication 7, **caractérisé en ce que** le véhicule (100) présente un capteur de vitesse (108) qui est aménagé pour détecter une vitesse de véhicule.

9. Véhicule (100) selon l'une quelconque des revendications 7 et 8, dans lequel le véhicule (100) présente un élément faisant ressort réglable (107), l'élément faisant ressort (107) étant aménagé pour être réglé sur un état de fonctionnement rigide.
